# EUROPEAN PATENT APPLICATION

(11) **EP 3 570 091 A1**
(43) Date of publication of application: **20.11.2019**
(21) Application number: 18020210.3
(22) Date of filing: 15.05.2018
(51) Int. Cl.: G02B 27/64, G03B 1/00

(54) **OPTICAL FIELD DEROTATOR MOUNTED ON THE NASMYTH FLANGE WITH PIEZO ACTUATORS**

(71) Applicant: FMW Isik Universitesi Opam Iktisadi Isletmesi, Istanbul (TR); Keskin, Onur, Istanbul (TR)
(72) Inventor: The designation of the inventor has not yet been filed

(57) **Abstract**

The invention discloses an optical field derotator mounted on the Nasmyth flange wherein piezo actuators allow computer controlled optical alignment. The invention also discloses an optical field derotator mounted on the Nasmyth flange wherein the setting flange acts as a mechanical interface to adjust alignment in the required degrees of freedom.

## Description

### BACKGROUND OF THE INVENTION

The invention discloses an optical field derotator mounted on the Nasmyth flange.

### DETAILED DESCRIPTION OF THE INVENTION

EP 1 852 727 B1 explains telescope mounts in detail.

Various types of supports or mounts for telescopes are available. According to a first general classification, mounts can be divided into equatorial mounts and alt-azimuth mounts.

The equatorial mount is characterized in that one of the two axes (said polar or right ascension axis) is capable of being inclined such as to be arranged parallel to the Earth's axis and thus perpendicular to the equator. Particularly, the right ascension axis (RA axis) is inclined by as many degrees as the ones of the latitude of the observation place and such as to be parallel to the pole (the North Pole for Northern hemisphere, and the South Pole for Southern hemisphere). This configuration allows one to track the apparent motion of a celestial body by moving the telescope about only one axis, i.e. by means of a simple motion that can be easily provided by means of an inexpensive drive. For this reason, the equatorial mount has become the most widely used in amateur telescopes.

In the second type of mount, i.e. the alt-azimuth mount, the two axes about which the telescope can move are the one orthogonal and the other parallel to the ground, such that the optics can move in all the directions along Cartesian axes. However, this arrangement of the axes of movement does not correspond to the arrangement of the Earth's axis and equatorial plane, which, as is known, at other latitudes than the poles are inclined relative thereto. Consequently, due to the Earth's true motion (spin about the North-South polar axis in the West-East direction), the optics, in order to track a celestial body in apparent motion, requires to be moved instant by instant along both axes in both directions. This movement is very complicated, and together with the rotation of the field of view during the movement, a prerequisite condition is also the constant movement of both motors relative to the two axes of movement (azimuth and altitude) in addition to a sophisticated automation (the so-called field derotator), which is normally inaccessible to beginners and amateur astronomers in general because of the high cost.

The advantage of the alt-azimuth mount, however, is its weight balance, which makes it applicable also to large-sized telescopes.

The present invention discloses an opto-mechanical interface to improve the optical performance on an alt-azimuth mount, i.e. a field derotator.

Field derotator is an addition to the telescope mount that was developed in response to field rotation.

The European Southern Observatory describes derotator as below:
"The derotator compensates for the field rotation happening at the VLT Nasmyth focus. It is a classical derotator based on two prisms: when rotated by an angle α, the image plane rotates by the angle 2α."

EP 2 539 758 B1 describes the concept of field rotation.

The base or the earth surface, which in general is experienced as substantially horizontal, due to the curvature of the earth surface is tilted with respect to the surface spanned by the equator, unless one is at the North or South Pole. The positioning of a telescope assembly on the curved earth surface at a distance from the North or South Pole, therefore results in the vertical axis of rotation being at a deviating angle to the parallactic axis of rotation, which is parallel to the polar line or polar axis of planet earth, perpendicular to the surface spanned by the equator of the earth. Due to said deviating angle and the fact that planet earth rotates about the polar axis, observing and in particular tracking celestial bodies from another location than the North or South Pole is subjected to a complex combination of the rotations. The field of view observed through the ocular lens rotates with respect to the celestial bodies observed, as a result of the rotation of planet earth as discussed above. This is also called field rotation. Field rotation, particularly in case of photography with a slow shutter speed, is undesirable, as it may lead to a blurred photo. Rotating the telescope about the vertical axis of rotation Z and the horizontal axis of rotation, counter to the rotation of planet earth, does not suffice to compensate the rotation of the earth, and as a consequence the field rotation.

The speed of the field rotation is the derivative of the parallactic angle with respect to time.

Getting high signal-to-noise observations requires long integration times (minutes to hours), so it is mandatory to compensate the rotation of the optical field due to the earth's rotation. The device which is used to compensate the optical field rotation is called a field derotator.

As described by Herbert Runciman in "Reflexion, refraction, difraction" (1990), there are many ways to compensate the field rotation, divided in three main categories.

First, it is possible to numerically rotate the integrated light on the detector. The main problem with this solution is that there is a signifcant loss of precision during the interpolation of the image - and numerical derotation is not possible in spectrography. Therefore the derotation must be optical and not numerical, because the compensation must be done before the scientific instruments.

Another solution is to compensate the rotation with a prism mount like Dove prism, Schmidt prism, Rantsch prism or Pechan prism. The concept is to built a structure which make an elbow to the optical path and turn it to counter the rotation. With this technique it is required to counter rotate the mount at half the speed of field rotation, because of the refections. However the weakness of this solution is that, except if the beam is collimated, the astigmatism is severe.

The third possibility is to build an optical mount like the second solution but with a mirror instead of prisms. The advantage is that there is no astigmatism. On the other hand, rigidity and positioning precision have been main challenges.

In one embodiment, the present invention discloses a K-mirror derotator design, wherein the field derotator is mounted on the Nasmyth flange (12).

Whether K-mirror design or not, mounting a field derotator on the Nasmyth flange generates challenges in telescope design. Rigidity and positioning precision have already been mentioned. Rigidity, as a general term, includes stress and deformations.

In addition to rigidity and positioning precision, additional challenges are:
i) geometry and available space, and
ii) thermal stability.

As a result of these four challenges, mounting a field derotator on the Nasmyth flange does not exist in prior art.

In their article titled "CANARY: the on-sky NGS/LGS MOAO demonstrator for EAGLE" (Proc. of SPIE Vol. 7015, 70150E, (2008)), the authors, in general, describe the challenges of telescope design.

### 1) Flange Design for Easy Calibration

The setting flange is indicated as part number 1. Since the derotator is designed as a cantilever, there will be natural deflections on the system. Also, during the mounting stage, alignment errors are expected by nature. The designed setting flange gives ability to the system to compensate for the alignment errors. The purpose of the setting flange is to adjust positioning of the whole system in both horizontal and vertical planes as well as pitch motion. The flange consists of flexible blades, which allow positioning of the system in horizontal and vertical directions. The movements are carried out by differential screws on the either side of the flange (part number is 2, where 3 is the housing of the screw). When the differential screw's spindle is moving, it pushes the flexible blades on the same direction of the movement. Tilt motion is done by another screw system which has same logic. The assembly can be seen on figures as part number 5.

### 2) Motorized Alignment for Mirrors

The derotator must be able to center beam of the incoming light. Since this is an opto-mechanical device, the misalignment scale is in microns. The setting flange allows for a rough correction, whereas the precise alignment is provided by the mirror motors in the system (part number 5). The motors enable the mirrors for tip and tilt motion. They are computer controlled. M1(part number 6) and M3 (part number 8) mirrors are placed on the K-mirror mount (part number 9), enabling the mount itself for tip and tilt motion thanks to the motors. The mirrors on the K-mirror mount are connected to comparators (part number 11) and comparators are connected to the K-mirror mount (part number 9). Thus, mirror surfaces can be adjusted parallel to the k mirror mount surfaces. The upper mirror mount carries M2 mirror (part number 7). This mirror is directly connected to the mount. The upper mirror mount (part number 10) has the ability of adjust tip and tilt motion thank to the motors. The mirror motors and comparators give ability to the system a very precise adjustment capability. By the performed design, the beam can then be centered on to the mirrors.

### 3) Cantilever Design

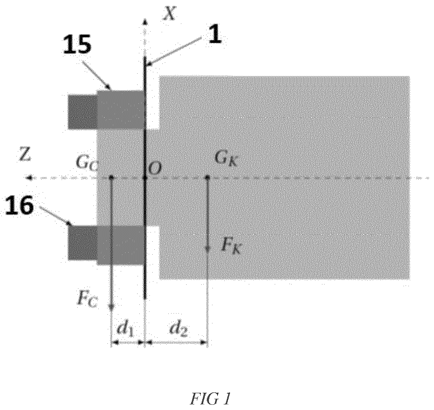

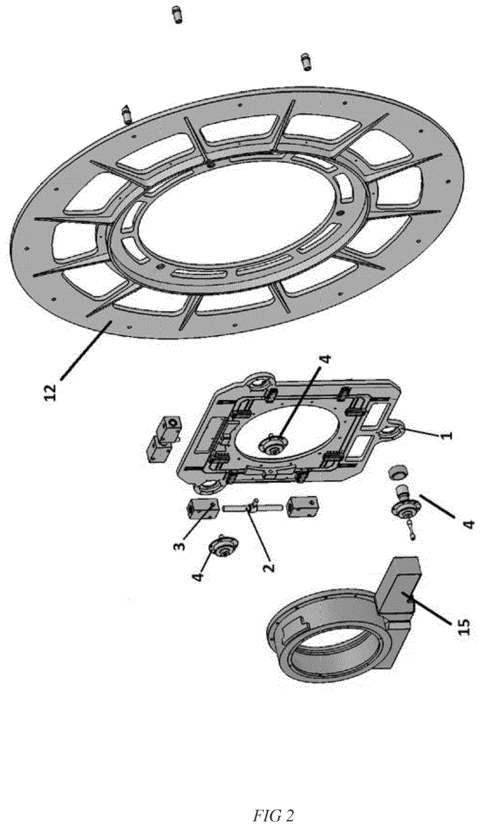

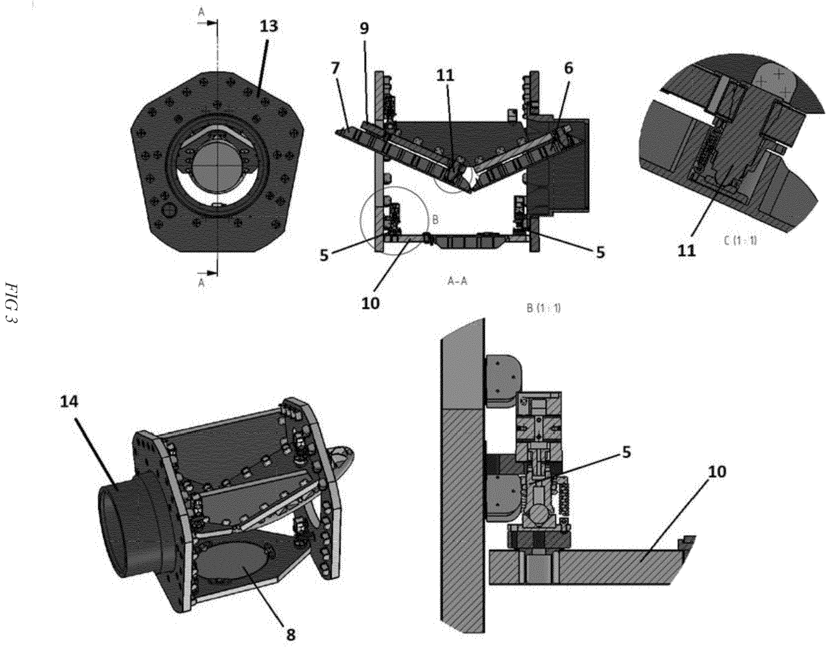

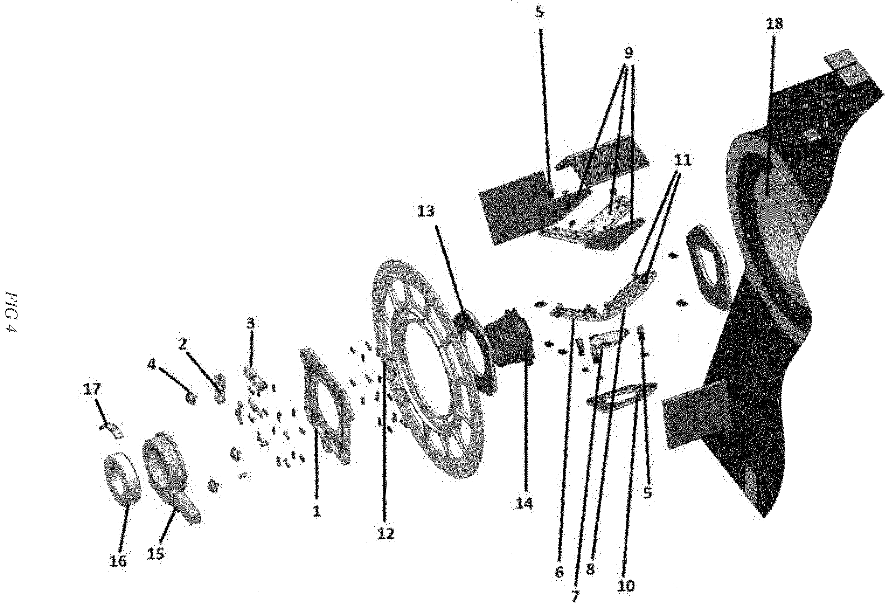

The derotator designed to be placed in the Nasmyth flange (part number 12). This approach provides a much larger free space on the nasmyth platform for focal plane instruments. General parts and location of the derotator can be seen on the FIG 4. On FIG 4, it can be seen that front face of the housing (part number 13) carries all the internal weight of the derotator. Part number 13 is attached to the shaft (part number 14). The setting flange (part number 1) is not connected to the shaft (14). It is directly connected to the rotational stage (part number 15). It is connected to the shaft (14). After the rotational stage (15), there are counter weights that are also connected to the shaft (14). They are indicated as number 16 and 17. The Counter weights balance the forces and moments on opposite side of the setting flange (1). When the rotational stage (15) turns, all system components also turn accordingly to the rotational stage (15), except the setting flange (1). The setting flange (1) is connected to the nasmyth flange (12). The nasmyth flange (12) is connected to the telescope arm (part number 18). This part is the only part of the derotator which is in contact with the telescope arm (18).

The derotator comprises four parts:
i) the shell that will envelop the mirror,
ii) a module that will include the two inclined lower mirrors,
iii) a module that will include the upper mirror, and
iv) a module that will drive the derotator.

In this embodiment, the derotator is mounted on a single bearing, which allows to avoid hyperstatism.

## Claims

1. An optical field derotator mounted on the Nasmyth flange wherein piezo actuators allow computer controlled optical alignment.

2. An optical field derotator according to Claim 1, wherein the optical field derotator is K-mirror design.

3. An optical field derotator according to Claim 1, wherein the optical field derotator is mounted on a single bearing.

4. An optical field derotator according to Claim 2, wherein the optical field derotator is mounted on a single bearing.

5. An optical field derotator mounted on the Nasmyth flange wherein the setting flange acts as a mechanical interface to adjust alignment in the required degrees of freedom.

6. An optical field derotator according to Claim 5, wherein the optical field derotator is K-mirror design.

7. An optical field derotator according to Claim 5, wherein the optical field derotator is mounted on a single bearing.

8. An optical field derotator according to Claim 6, wherein the optical field derotator is mounted on a single bearing.
